# EUROPEAN PATENT SPECIFICATION

(11) **EP 1 467 244 B1**
(45) Date of publication and mention of the grant of the patent: **12.10.2005**
(21) Application number: 03252164.3
(22) Date of filing: 04.04.2003
(51) Int. Cl.: G03B 17/56, A45C 11/08

(54) **Camera accessory case**
Zubehörkoffer für Kamera
Boite à accessoires pour caméra

(43) Date of publication of application: 13.10.2004
(73) Proprietor: Ma, Pony, Taipei City (TW)
(72) Inventor: Ma, Pony, Taipei City (TW)
(74) Representative: Jenkins, Peter David

(56) References cited:
- GB-A- 2 332 621
- US-A- 3 863 945
- US-A- 5 433 358
- US-A- 5 651 455

## Description

The invention relates to a camera accessory case, more particularly to a camera accessory case adapted to be mounted on a camera connecting plate of a camera stand.

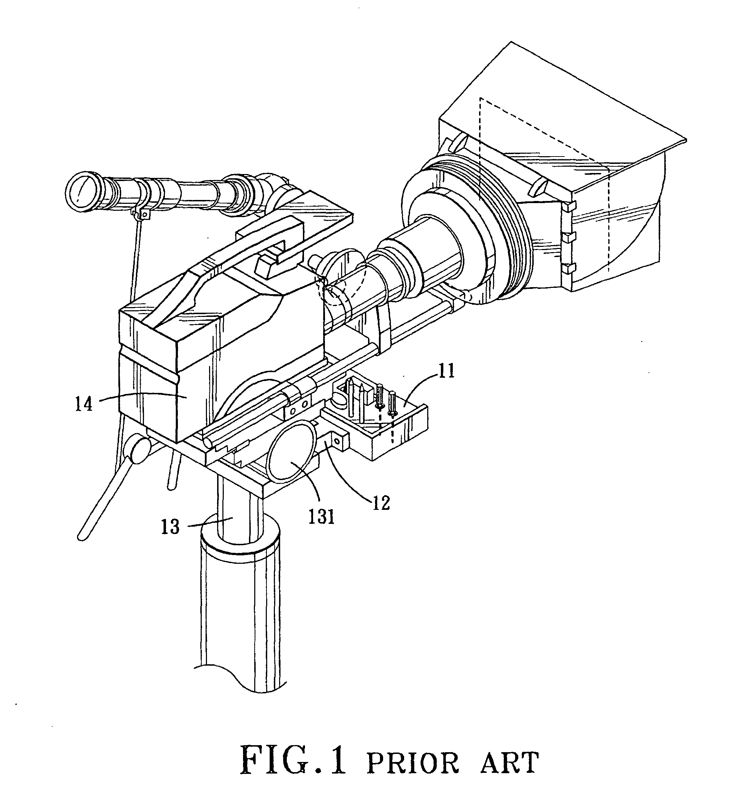

During film-making, in order to dispense with the need for film-making personnel to carry essential camera accessories, such as chalks, flashlights, ball-point pens, screw drivers, etc. , and in order to ensure that the camera accessories are within easy reach, it has been proposed heretofore to mount a camera accessory holder 11 on a camera stand 13 which supports a camera 14 thereon, as best shown in Figure 1. The holder 11 is mounted on the camera stand 13 with the use of a support frame 12 such that the holder 11 is disposed at the front side of the camera stand 13 , i.e., the direction of the lens of the camera 14. The holder 11 is formed with a plurality of receiving spaces to receive different camera accessories therein. A camera support 131 of the camera stand 13 is pivotable to adjust tilting angle of the camera 14 in different directions. The holder 11 remains still during tilt adjustment of the camera support 131.

The aforesaid camera accessory holder 11 is disadvantageous in that, when the camera 14 is operated to tilt forwardly, the lens of the camera 14 might collide with the camera accessories on the holder 11. The holder 11 thus interferes with the movement of the camera 14 on the camera stand 13, which necessitates dismounting of the holder 11 and which inconveniences the film-making personnel.

Therefore, the object of the present invention is to provide a camera accessory case that can be used to store camera accessories therein and that is clear of the aforesaid drawback associated with the conventional camera accessory holder.

Accordingly, the camera accessory case of the present invention is adapted to be mounted on a camera connecting plate of a camera stand, and comprises a casing body and an anchoring unit.

The casing body has a bottom wall and a peripheral wall extending upwardly from a periphery of the bottom wall. The bottom wall and the peripheral wall cooperate to confine an accessory receiving space that has a top opening. The casing body has a casing axis transverse to the bottom wall.

The anchoring unit has a plate connecting portion adapted to be mounted fixedly on the camera connecting plate, and a casing connecting portion connected pivotally to the plate connecting portion and further connected to the peripheral wall of the casing body such that the casing axis can be disposed in an upright position even when the camera connectingplate is tilted.

Other features and advantages of the present invention will become apparent in the following detailed description of the preferred embodiment with reference to the accompanying drawings, of which:
Figure 1 is a perspective view showing a conventional camera accessory holder mounted on a camera stand;
Figure 2 is an exploded perspective view of the preferred embodiment of a camera accessory case according to the present invention;
Figure 3 is an assembled perspective view of the preferred embodiment when mounted on a camera stand;
Figure 4 is a schematic view illustrating the camera accessory case of the preferred embodiment when a camera on the camera stand is tilted;
Figure 5 is another schematic view illustrating the camera accessory case of the preferred embodiment when the camera on the camera stand is tilted sidewise; and
Figure 6 is a perspective view similar to Figure 3, but showing a lid on a casing body of the preferred embodiment when pivoted to an uncovering position.

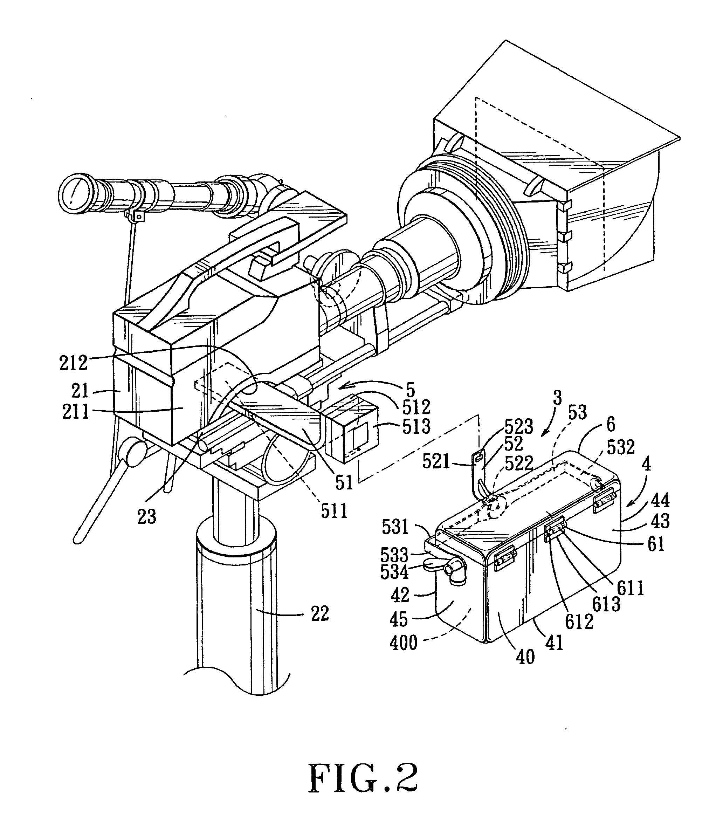

As shown in Figure 2, the bottom side of a camera 21 is connected to a camera connecting plate 23 to permit mounting of the camera 21 on a camera stand 22. Since the position of the camera accessory case 3 of this invention should not interfere with tilting operations of the camera 21, the camera accessory case 3 is mounted on the camera connecting plate 23 or on top of the camera stand 22 and is disposed adjacent to the left or right lateral side of the camera 21. For the sake of illustration, the camera accessory case 3 of this invention is shown in the drawings to be disposed adjacent to the right lateral side 211 of the camera 21. It is also noted that the bottom side of the camera 21 is usually formed with a groove 212 that permits resting of the camera 21 on a shoulder of a cameraman. Therefore, a space is present between the camera 21 and the camera connecting plate 23 due to the groove 212. Accordingly, the camera accessory case 3 of this invention is preferably adapted to be mounted in the space between the camera 21 and the camera connecting plate 23 for convenience in design and for efficient utilization of space.

The preferred embodiment of the camera accessory case 3 according to this invention includes a casing body 4, an anchoring unit 5 and a lid 6.

The casing body 4 includes a bottom wall 41 and a peripheral wall 40 extending upwardly from a periphery of the bottom wall 41. The bottom wall 41 and the peripheral wall 40 cooperate to confine an accessory receiving space 400 that has a top opening. The accessory receiving space 400 may be partitioned into a plurality of compartments (not shown) for receiving different camera accessories (not shown) therein. The casing body 4 has a casing axis transverse to the bottom wall 41. In this embodiment, the bottom wall 41 is rectangular, and the peripheral wall 40 includes a left upright wall portion 42, a right upright wall portion 43, a front upright wall portion 44, and a rear upright wall portion 45.

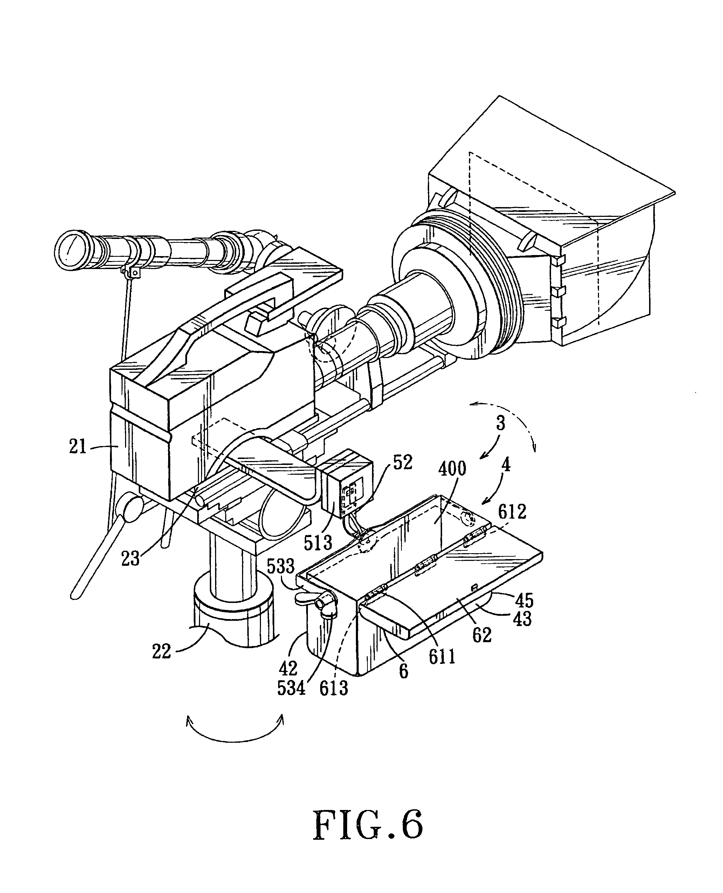

The lid 6 serves to cover the top opening of the accessory receiving space 400. Hinges 61 interconnect pivotally the lid 6 and the peripheral wall 40. In order to prevent the camera 21 or components of the camera stand 22 from interfering with uncovering movement of the lid 6, the hinges 61 are preferably mounted on an outer top edge of one of the wall portions 42, 43, 44, 45 that is farthest from the camera 21 and the camera stand 22. As illustrated in Figure 2, since the left upright wall portion 42 is closest to the camera 21, the hinges 61 are preferably mounted on the right upright wall portion 43. With further reference to Figure 6, the lid 6 has a flat surface 62 that faces upwardly when the lid 6 is pivoted to an uncovering position. Each hinge 61 includes first and second hinge leaves 612, 613 connected respectively to the lid 6 and the right upright wall portion 43 of the peripheral wall 40, and a hinge pin 611 interconnecting the first and second hinge leaves 612, 613. The first and second hinge leaves 612, 613 cooperate to support the lid 6 at the uncovering position. Particularly, the first hinge leaf 612 abuts against the second hinge leaf 613 when the lid 6 is at the uncovering position so that the flat surface 62 of the lid 6, which is made of a material of sufficient hardness, can serve as a writing support.

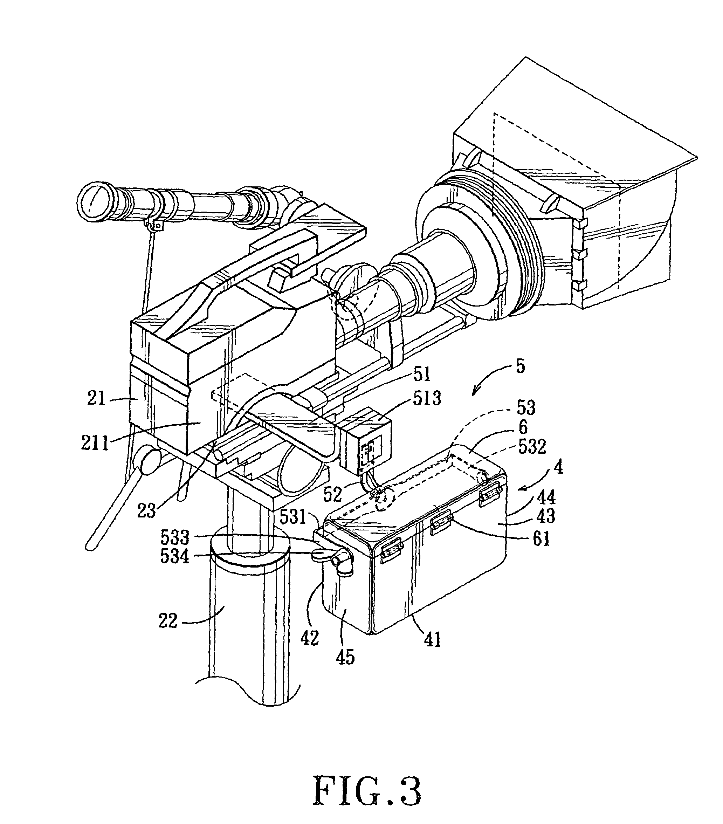

Referring to Figures 2 and 3, the anchoring unit 5 includes first and second anchoring plates 51, 52, which constitute a plate connecting portion that is adapted to be mounted fixedly on the camera connecting plate 23, and an anchoring frame 53, which serves as a casing connecting portion that is connected pivotally to the plate connecting portion and that is further connected to the peripheral wall 40 of the casing body 4 such that the casing axis can be disposed in an upright position even when the camera connecting plate 23 is tilted.

The first anchoringplate 51 extends ina longitudinal direction and has a first end 511 that is adapted to be mounted fixedly on the camera connecting plate 23 so as to be disposed in the space between the camera 21 and the camera connecting plate 23, and a second end 512 opposite to the first end 511 in the longitudinal direction. Accordingly, the second end 512 of the first anchoring plate 51 projects relative to the right lateral side 211 of the camera 21.

The second anchoring plate 52 has a first plate end 521 connected to the second end 512 of the first anchoring plate 51, and a second plate end 522 connected pivotally to the anchoring frame 53. In this embodiment, the second plate end 522 is spaced apart from the first plate end 521 along a transverse direction that is transverse to the longitudinal direction of the first anchoring plate 51.

The anchoring frame 53 of this embodiment includes a first arm 531 that has a middle segment connected pivotally to the second plate end 522 of the second anchoring plate 52 and that is disposed adjacent to the left upright wall portion 42, and second and third arms 532, 533 that extend transversely from opposite ends of the first arm 531 and that are connected pivotally and respectively to the front and rear upright wall portions 44, 45 of the peripheral wall 40 of the casing body 4 adjacent to the top opening of the accessory receiving space 400 . The first arm 531 is slightly longer than the length of the casing body 4, i.e. , the distance between the front and rear upright wall portions 44, 45. The lengths of the second and third arms 532, 533 are equal and are shorter than the width of the casing body 4, i.e., the distance between the left and right upright wall portions 42, 43.

In this embodiment, the anchoring unit 5 further includes a releasable locking member 534, in the form of a wing nut, for arresting selectively pivoting movement of the third arm 533, and thus the anchoring frame 53, relative to the peripheral wall 40 of the casing body 4. Another releasable locking member (not shown) may be employed to act on the second arm 532 in a similar manner.

In the preferred embodiment, the anchoring unit 5 further includes a releasable fastening unit 513 for interconnecting releasably and non-rotatably the first plate end 521 of the second anchoring plate 52 and the second end 512 of the first anchoring plate 51. The fastening unit 513 is conventional in construction, is mounted on the second end 512 of the first anchoring plate 51, and engages releasably an engaging hole 523 formed in the first plate end 521 of the second anchoring plate 52. Due to the fastening unit 513, the casing body 4 can be mounted and dismounted with relative ease.

It should be noted that, in this embodiment, the plate connecting portion of the anchoring unit 5 is split into the first and second anchoring plates 51, 52 for the purpose of convenience when mounting and dismounting the casing body 4. In practice, it is feasible to form the plate connecting portion into a single integral unit if convenience when mounting and dismounting the casing body 4 is not a primary concern.

Moreover, weight can be added to the bottom wall 41 of the casing body 4 to avoid unforced swaying of the casing body 4.

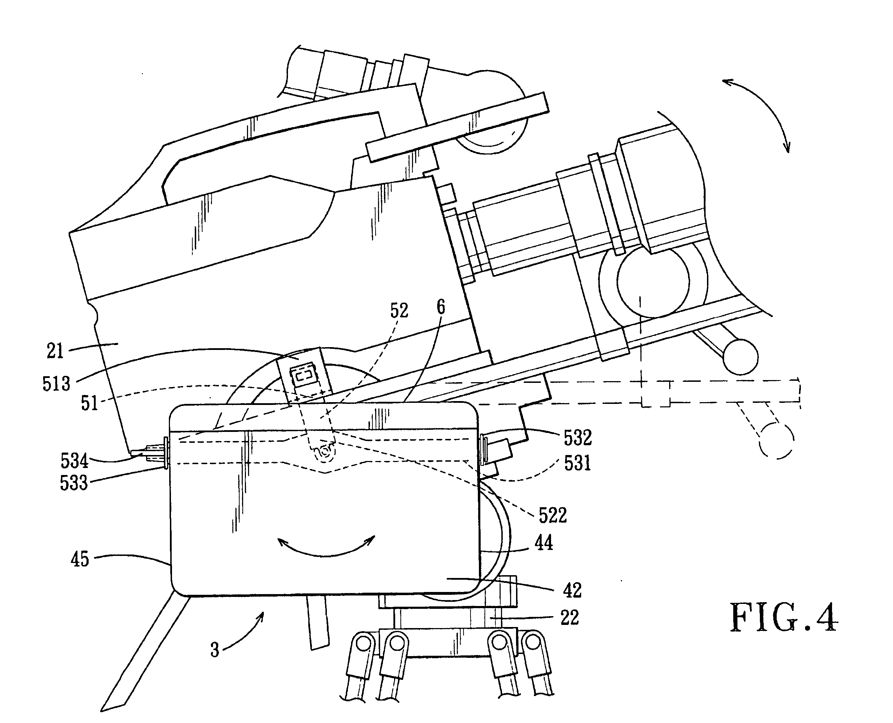

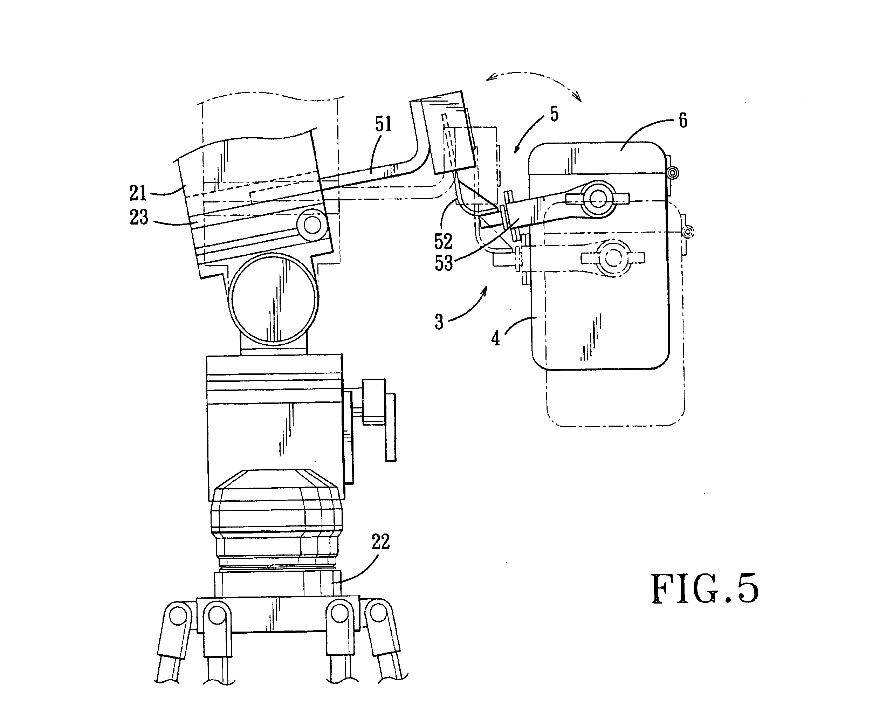

Referring once again to Figure 3, when the camera 21 tilts, because the camera accessory case 3 is connected to the camera connecting plate 23, the camera accessory case 3 will move as well such that the camera 21 will not collide with the camera accessory case 3. Moreover, referring to Figure 4, when the camera connecting plate 23 is tilted forwardly or rearwardly, the first and second anchoring plates 51, 52 will do the same accordingly. However, since the anchoring frame 53 is pivotally connected to the second anchoring plate 52, and since the anchoring frame 53 bears the relatively heavy weight of the casing body 4, the casing axis of the casing body 4 can be maintained in the upright position. Furthermore, referring to Figure 5, when the camera 21 is tilted sidewise, and the locking member 534 is operated to permit pivoting movement of the anchoring frame 53 relative to the casing body 4, the casing axis of the casing body 4 can still be disposed in the upright position by virtue of the weight of the casing body 4.

In sum, the camera accessory case 3 of this invention is designed to prevent collision with the camera 21 when adjusting tilt of the latter, and has a casing body 4 with a casing axis that can be disposed in the upright position to ensure that items do not spill out of the casing body 4 even when the camera connecting plate 23 is tilted. Moreover, the lid 6 of the camera accessory case 3 can further serve as a writing support when disposed at the uncovering position.

## Claims

1. A camera accessory case (3) adapted to be mounted on a camera connecting plate (23) of a camera stand (22), **characterized by**:
a casing body (4) having a bottom wall (41) and a peripheral wall (40) extending upwardly from a periphery of said bottom wall (41), said bottom wall (41) and said peripheral wall (40) cooperating to confine an accessory receiving space (400) that has a top opening, said casing body (4) having a casing axis transverse to said bottom wall (41); and
an anchoring unit (5) having a plate connecting portion adapted to be mounted fixedly on the camera connecting plate (23), and a casing connecting portion connected pivotally to said plate connecting portion and further connected to said peripheral wall (40) of said casing body (4) such that the casing axis can be disposed in an upright position even when the camera connecting plate (23) is tilted.

2. The camera accessory case (3) as claimed in Claim 1, **characterized in that** said anchoring unit (5) includes an anchoring frame (53) which serves as said casing connecting portion, said anchoring frame (53) including a first arm (531) connected pivotally to said plate connecting portion, and second and third arms (532, 533) which extend transversely from opposite ends of said first arm (531) and which are connected to said peripheral wall (40) of said casing body (4).

3. The camera accessory case (3) as claimed in Claim 2, further **characterized in that** said second and third arms (532, 533) are connected pivotally to said peripheral wall (40) adjacent to said top opening of said accessory receiving space (400).

4. The camera accessory case (3) as claimed in Claim 2, further **characterized in that** said first arm (531) has a middle segment connected pivotally to said plate connecting portion.

5. The camera accessory case (3) as claimed in Claim 2, further **characterized in that** said bottom wall (41) of said casing body (4) is rectangular, and said peripheral wall (40) includes a left upright wall portion (42), a right upright wall portion (43), a front upright wall portion (44) and a rear upright wall portion (45),
said second and third arms (532, 533) being connected pivotally and respectively to said front and rear upright wall portions (44, 45),
said first arm (531) being disposed adjacent to one of said left and right upright wall portions (42, 43) .

6. The camera accessory case (3) as claimed in Claim 5, **characterized in that** said anchoring unit (5) further includes a releasable locking member (534) for arresting selectively pivoting movement of one of said second and third arms (532, 533) relative to said peripheral wall (40) of said casing body (4).

7. The camera accessory case (3) as claimed in Claim 2 , **characterized in that** said anchoring unit (5) further includes first and second anchoring plates (51, 52) that constitute said plate connecting portion,
said first anchoring plate (51) extending in a longitudinal direction and having a first end (511) that is adapted to be mounted fixedly on the camera connecting plate (23), and a second end (512) opposite to said first end (511) in the longitudinal direction,
said second anchoring plate (52) having a first plate end (521) connected to said second end (512) of said first anchoring plate (51), and a second plate end (522) connected pivotally to said first arm (531).

8. The camera accessory case (3) as claimed in Claim 7, further **characterized in that** said second plate end (522) is spaced apart from said first plate end (521) along a transverse direction that is transverse to the longitudinal direction.

9. The camera accessory case (3) as claimed in Claim 7, **characterized in that** said anchoring unit (5) further includes a releasable fastening unit (513) for interconnecting releasably and non-rotatably said first plate end (521) of said second anchoring plate (52) and said second end (512) of said first anchoring plate (51).

10. The camera accessory case (3) as claimed in Claim 5, further **characterized by** a lid (6) for covering said top opening of said accessory receiving space (400), and a hinge (61) for interconnecting pivotally said lid (6) and the other one of said left and right upright wall portions (42, 43).

11. The camera accessory case (3) as claimed in Claim 10, further **characterized in that** said lid (6) has a flat surface (62) that faces upwardly when said lid (6) is pivoted to an uncovering position, said hinge (61) including first and second hinge leaves (612, 613) connected respectively to said lid (6) and said peripheral wall (40) of said casing body (4), and a hinge pin (611) interconnecting said first and second hinge leaves (612, 613), said first and second hinge leaves (612, 613) cooperating to support said lid (6) at the uncovering position.

## Patentansprüche

1. Kamerazubehörbehälter (3), der angepasst ist, um an einer Kameraverbindungsplatte (23) eines Kamerastativs (22) angebracht zu werden, **gekennzeichnet durch**:
einen Gehäusekörper (4), der eine Unterseiten- bzw. Bodenwand (41) und eine periphere bzw. Umfangswand (40) hat, die sich von einem Umfang der Unterseiten- bzw. Bodenwand (41) nach oben erstreckt, wobei die Unterseiten- bzw. Bodenwand (41) und die periphere bzw. Umfangswand (40) dazu beitragen bzw. zusammenwirken, um einen Zubehöraufnahmeplatz bzw. -raum (400) zu begrenzen, der eine obere Öffnung hat, wobei der Gehäusekörper (4) eine Gehäuseachse quer zu der Unterseiten- bzw. Bodenwand (41) hat; und
eine Verankerungseinheit (5), die einen Plattenverbindungsteil, der angepasst ist, um fest an der Kameraverbindungsplatte (23) angebracht zu werden, und einen Gehäuseverbindungsteil hat, der gelenkig bzw. schwenkbar mit dem Plattenverbindungsteil verbunden ist und ferner mit der peripheren bzw. Umfangswand (40) des Gehäusekörpers (4) derart verbunden ist, dass die Gehäuseachse in einer aufrechten bzw. senkrechten Position angeordnet werden kann, sogar wenn die Kameraverbindungsplatte (23) geneigt ist.

2. Kamerazubehörbehälter (3), wie in Anspruch 1 beansprucht, **dadurch gekennzeichnet, dass** die Verankerungseinheit (5) einen Verankerungsrahmen (53) enthält, welcher als der Gehäuseverbindungsabschnitt dient, wobei der Verankerungsrahmen (53) einen ersten Arm (531), der gelenkig bzw. schwenkbar mit dem Plattenverbindungsteil verbunden ist, und zweite und dritte Arme (532, 533) enthält, welche sich quer von entgegengesetzten Enden des ersten Armes (531) erstrecken und welche mit der peripheren bzw. Umfangswand (40) des Gehäusekörpers (4) verbunden sind.

3. Kamerazubehörbehälter (3), wie in Anspruch 2 beansprucht, ferner **dadurch gekennzeichnet, dass** die zweiten und dritten Arme (532, 533) gelenkig bzw. schwenkbar mit der peripheren bzw. Umfangswand (40) verbunden sind, angrenzend an die obere Öffnung des Zubehöraufnahmeplatzes bzw. -raumes (400).

4. Kamerazubehörbehälter (3), wie in Anspruch 2 beansprucht, ferner **dadurch gekennzeichnet, dass** der erste Arm (531) einen mittleren Abschnitt hat, der gelenkig bzw. schwenkbar mit dem Plattenverbindungsteil verbunden ist.

5. Kamerazubehörbehälter (3), wie in Anspruch 2 beansprucht, ferner **dadurch gekennzeichnet, dass** die Unterseiten- bzw. Bodenwand (41) des Gehäusekörpers (4) rechteckig ist, und die periphere bzw. Umfangswand (40) einen linken aufrechten bzw. senkrechten Wandteil (42), einen rechten aufrechten bzw. senkrechten Wandteil (43), einen vorderen aufrechten bzw. senkrechten Wandteil (44) und einen hinteren aufrechten bzw. senkrechten Wandteil (45) enthält, wobei die zweiten und dritten Arme (532, 533) gelenkig bzw. schwenkbar und jeweils mit den vorderen und hinteren aufrechten bzw. senkrechten Wandteilen (44, 45) verbunden sind, wobei der erste Arm (531) angrenzend an eines der linken und der rechten aufrechten bzw. senkrechten Wandteile (42, 43) angeordnet ist.

6. Kamerazubehörbehälter (3), wie in Anspruch 5 beansprucht, **dadurch gekennzeichnet, dass** die Verankerungseinheit (5) ferner ein lösbares Sicherungs- bzw. Verriegelungsglied (534) zum wahlweisen Feststellen bzw. Arretieren der Schwenkbewegung von einem der zweiten und dritten Arme (532, 533) relativ zu der peripheren bzw. Umfangswand (40) des Gehäusekörpers (4) enthält.

7. Kamerazubehörbehälter (3), wie in Anspruch 2 beansprucht, **dadurch gekennzeichnet, dass** die Verankerungseinheit (5) ferner erste und zweite Verankerungsplatten (51, 52) enthält, die den Plattenverbindungsteil bilden, wobei sich die erste Verankerungsplatte (51) in einer Längsrichtung erstreckt und ein erstes Ende (511), das angepasst ist, um fest an der Kameraverbindungsplatte (23) angebracht zu werden, und ein zweites Ende (512) hat, das entgegengesetzt zu dem ersten Ende (511) in der Längsrichtung ist, wobei die zweite Verankerungsplatte (52) ein erstes Plattenende (521), dass mit dem zweiten Ende (512) der ersten Verankerungsplatte (51) verbunden ist, und ein zweites Plattenende (522) hat, das gelenkig bzw. schwenkbar mit dem ersten Arm (531) verbunden ist.

8. Kamerazubehörbehälter (3), wie in Anspruch 7 beansprucht, ferner **dadurch gekennzeichnet, dass** das zweite Plattenende (522) von dem ersten Plattenende (521) entlang einer Querrichtung beabstandet ist, die quer zu der Längsrichtung ist.

9. Kamerazubehörbehälter (3), wie in Anspruch 7 beansprucht, **dadurch gekennzeichnet, dass** die Verankerungseinheit (5) ferner eine lösbare Befestigungseinheit (513) zum lösbaren und nicht drehbaren Verbinden des ersten Plattenendes (521) der zweiten Verankerungsplatte (52) und des zweiten Endes (512) der ersten Verankerungsplatte (51) miteinander enthält.

10. Kamerazubehörbehälter (3), wie in Anspruch 5 beansprucht, ferner **gekennzeichnet durch** einen Deckel (6) zum Bedecken der oberen Öffnung des Zubehöraufnahmeplatzes bzw. -raumes (400), und ein Scharnier (61) zum gelenkigen bzw. schwenkbaren Verbinden des Deckels (6) und des anderen einen der linken und rechten aufrechten bzw. senkrechten Wandteile (42, 43) miteinander.

11. Kamerazubehörbehälter (3), wie in Anspruch 10 beansprucht, ferner **dadurch gekennzeichnet, dass** der Deckel (6) eine flache bzw. ebene Oberfläche (62) hat, die nach oben gerichtet ist, wenn der Deckel (6) in eine nicht abgedeckte Position geschwenkt ist, wobei das Scharnier (61) erste und zweite Scharnierblätter bzw. -flügel (612, 613) enthält, die jeweils mit dem Deckel (6) und der peripheren bzw. Umfangswand (40) des Gehäusekörpers (4) verbunden sind, und wobei ein Scharnierstift bzw. -zapfen (611) die ersten und zweiten Scharnierblätter bzw. -flügel (612, 613) miteinander verbindet, wobei die ersten und zweiten Scharnierblätter bzw. -flügel (612, 613) dazu beitragen bzw. zusammenwirken, um den Deckel (6) in der unabgedeckten Position zu tragen bzw. stützen.

## Revendications

1. Boîte d'accessoires photographiques (3) adaptée à être montée sur une platine de fixation d'appareil photographique (23) d'un pied d'appareil photographique (22), **caractérisée par** :
un corps de boîte (4) ayant une paroi de fond (41) et une paroi périphérique (40) s'étendant vers le haut à partir de la périphérie de la paroi de fond (41), la paroi de fond (41) et la paroi périphérique (40) coopérerant pour définir un espace de réception d'accessoires (400) qui a une ouverture supérieure, le corps de boîte (4) ayant un axe de boîte transverse à la paroi de fond (41) ; et
un élément de fixation (5) comportant une partie de liaison de plaque adaptée à être montée de façon fixe sur la platine de fixation d'appareil photographique (23) et une partie de liaison de boîte reliée à pivotement à la partie de liaison de plaque et reliée en outre à la paroi périphérique (40) du corps de boîte (4) de sorte que l'axe de la boîte peut être disposé tourné vers le haut même quand la platine de fixation d'appareil photographique (23) est inclinée.

2. Boîte d'accessoires photographiques (3) selon la revendication 1, **caractérisée en ce que** l'élément de fixation (5) inclut un cadre de fixation (53) qui sert de partie de liaison de boîte, le cadre de fixation (53) incluant un premier bras (531) monté à pivotement sur la partie de liaison de plaque et des deuxième et troisième bras (532, 533) qui s'étendent transversalement à partir des extrémités opposées du premier bras (531) et qui sont connectées à la paroi périphérique (40) du corps de boîte (4).

3. Boîte d'accessoires photographiques (3) selon la revendication 2, **caractérisée en outre en ce que** les deuxième et troisième bras (532, 533) sont reliés à pivotement à la paroi périphérique (40) adjacente à l'ouverture supérieure de l'espace de réception d'accessoires (400).

4. Boîte d'accessoires photographiques (3) selon la revendication 2, **caractérisée en outre en ce que** le premier bras (531) a une partie médiane connectée à pivotement à la partie de liaison de plaque.

5. Boîte d'accessoires photographiques (3) selon la revendication 2, **caractérisée en outre en ce que** la paroi de fond (41) du corps de boîte (4) est rectangulaire, et la paroi périphérique (40) inclut une partie de paroi verticale gauche (42), une partie de paroi verticale droite (43), une partie de paroi verticale avant (44) et une partie de paroi verticale arrière (45) ;
les deuxième et troisième bras (532, 533) étant reliés à pivotement et respectivement aux parties de parois verticales avant et arrière (44 et 45) ;
le premier bras (531) étant disposé au voisinage de l'une des parties de parois verticales gauche et droite (42, 43).

6. Boîte d'accessoires photographiques (3) selon la revendication 5, **caractérisée en ce que** l'élément de fixation (5) comprend en outre un élément de verrouillage détachable (534) pour bloquer sélectivement le mouvement de pivotement de l'un des deuxième et troisième bras (532, 533) par rapport à la paroi périphérique (40) du corps de boîte (4).

7. Boîte d'accessoires photographiques (3) selon la revendication 2, **caractérisée en ce que** l'élément de fixation (5) comprend en outre des première et seconde plaques de fixation (51, 52) qui constituent la partie de liaison de plaques ;
la première plaque de fixation (51) s'étendant dans une direction longitudinale et ayant une première extrémité (511) qui est adaptée à être montée fixe sur la platine de fixation d'appareil photographique (23) et une seconde extrémité (512) opposée à la première extrémité (511) dans la direction longitudinale ;
la seconde plaque de fixation (52) ayant une première extrémité de plaque (521) reliée à la seconde extrémité (512) de la première plaque de fixation (51) et une seconde extrémité de plaque (522) reliée à pivotement au premier bras (531).

8. Boîte d'accessoires photographiques (3) selon la revendication 7, **caractérisé en outre en ce que** la seconde extrémité de plaque (522) est espacée de la première extrémité de plaque (521) dans une direction transverse à la direction longitudinale.

9. Boîte d'accessoires photographiques (3) selon la revendication 7, **caractérisée en ce que** l'élément de fixation (5) comprend en outre un module de liaison amovible (513) pour interconnecter de façon amovible et sans rotation la première plaque d'extrémité (521) de la seconde plaque de fixation (52) et la seconde extrémité (512) de la première plaque de fixation (51).

10. Boîte d'accessoires photographiques (3) selon la revendication 5, **caractérisée en outre par** un couvercle (6) pour recouvrir l'ouverture supérieure de l'espace de réception d'accessoire (400) et une charnière (61) pour interconnecter à pivotement le couvercle (6) et l'autre des parois d'extrémité verticales gauche et droite (42, 43).

11. Boîte d'accessoires photographiques (3) selon la revendication 10, **caractérisée en outre en ce que** le couvercle (6) a une surface plane (62) qui est tournée vers le haut quand le couvercle (6) est tourné vers une position de non recouvrement, la charnière (61) incluant des première et seconde plaques de charnière (612, 613) reliées respectivement au couvercle (6) et à la paroi périphérique (40) du corps de boîte (4), et une tige de charnière (611) reliant les première et seconde plaques de charnière (612, 613), les première et seconde plaques de charnière (612, 613) coopérant pour porter le couvercle (6) dans la position de non recouvrement.
